# EUROPÄISCHE PATENTANMELDUNG

(11) **EP 3 651 082 A1**
(43) Veröffentlichungstag der Anmeldung: **13.05.2020**
(21) Anmeldenummer: 18205724.0
(22) Anmeldetag: 12.11.2018
(51) Int. Cl.: G06N 20/00, G06N 3/04, G06N 7/00

(54) **VERFAHREN UND ASSISTENZSYSTEM ZUM GENERIEREN VON TRAININGSDATEN ZUM LERNBASIERTEN KONFIGURIEREN EINES TECHNISCHEN SYSTEMS**

(71) Anmelder: Siemens Aktiengesellschaft, 80333 München (DE)
(72) Erfinder: Geipel, Markus Michael, 80799 München (DE); Mittelstädt, Sebastian, 81541 München-Haidhausen (DE)

(57) **Zusammenfassung**

Zum Generieren von Trainingsdaten werden zunächst Sensordaten (SD) des technischen Systems (TS) oder eines technischen Referenzsystems in Trainingsdatensätzen (TD) gespeichert. Anhand der gespeicherten Trainingsdatensätze (TD) wird ein Datengenerator (GEN) darauf trainiert, synthetische Datensätze (STD) mit einer zumindest näherungsweise gleichen Werteverteilung wie die gespeicherten Trainingsdatensätze (TD) zu generieren. Mittels des trainierten Datengenerators (GEN) werden dann synthetische Datensätze (STD) generiert. Die synthetischen Datensätze (STD) und/oder daraus abgeleitete Bewertungsdatensätze (BD) werden über eine Ausgabeschnittstelle (OUT) ausgegeben. Über eine Eingabeschnittstelle (IN) wird für einen jeweiligen synthetischen Datensatz (STD) eine Plausibilitätsangabe (PA) eingelesen und abhängig davon der jeweilige synthetische Datensatz (STD) als Trainingsdatensatz (TD) gespeichert. Weiterhin werden zumindest das Training des Datengenerators (GEN) sowie die Generierung der synthetischen Datensätze (STD) erneut ausgeführt.

## Beschreibung

Bei der Steuerung komplexer technischer Systeme, wie z.B. Ölförderpumpen, Windturbinen, Gasturbinen oder Fertigungsanlagen werden zunehmend Verfahren des maschinellen Lernens eingesetzt, um den Betrieb des technischen Systems hinsichtlich vorgegebener Kriterien zu optimieren und Fehlfunktionen, Beschädigungen oder andere Betriebsanomalien frühzeitig zu detektieren und zu identifizieren.

Bei schwer zugänglichen technischen Systemen, wie z.B. bei Pumpen zur Ölförderung, ist es oft schwierig, das System zur Fehleranalyse genauer zu untersuchen. So ist es bei einer im Bohrloch versenkten Ölförderpumpe in der Regel sehr aufwendig, die Pumpe zur Inspektion aus dem Bohrloch herauszuholen. Es wird deshalb angestrebt, Betriebsanomalien bereits anhand der im laufenden Betrieb erfassten Sensordaten des technischen Systems, z.B. anhand spezifischer Druck- und Temperaturwerte und/oder anhand von Motorströmen zu detektieren und gegebenenfalls eine Ursache der jeweiligen Betriebsanomalie zu identifizieren, bevor das technische System tatsächlich ausfällt.

Zu diesem Zweck können maschinelle Lernverfahren eingesetzt werden, mit deren Hilfe das technische System oder eine Steuerung des technischen Systems darauf trainiert wird, Muster in den erfassten Sensordaten zu detektieren, die für Betriebsanomalien, Fehlfunktionen, Beschädigungen oder Fehlerursachen charakteristisch sind. Durch das Training kann das technische System in einer Weise konfiguriert werden, dass es anhand von im laufenden Betrieb erfassten Sensordaten Betriebsanomalien häufig korrekt detektieren und entsprechend reagieren kann.

Zum Training können bekannte Lernverfahren, insbesondere des überwachten Lernens eingesetzt werden. Hierbei wird z.B. einem neuronalen Netz der Steuerung eine große Vielzahl von vorab klassifizierten Sensordaten als Trainingsdaten zugeführt. Klassifiziert bedeutet in diesem Zusammenhang, dass den Sensordaten jeweils eine Angabe über ein Vorliegen einer Betriebsanomalie zugeordnet ist. Das neuronale Netz wird dann darauf trainiert, dass es anhand der klassifizierten Sensordaten die jeweils zugeordnete Angabe möglichst gut reproduziert. Die Steuerung wird so durch das Training konfiguriert. Das trainierte neuronale Netz bzw. die trainierte Steuerung kann dann anhand von im laufenden Betrieb erfassten, nicht klassifizierten Sensordaten eine häufig zutreffende Angabe über das Vorliegen einer Betriebsanomalie ausgeben und das technische System entsprechend steuern.

Als Trainingsdaten können insbesondere historische Sensordaten oder andere Betriebsdaten des zu steuernden technischen Systems oder ähnlicher technischer Referenzsysteme verwendet werden. In der Regel ist ein Training umso erfolgreicher, je mehr Trainingsdaten verfügbar sind. Insbesondere sollten die Trainingsdaten zur zuverlässigen Detektion von Betriebsanomalien einen möglichst großen Bereich von möglichen Betriebsanomalien des technischen Systems repräsentativ abdecken. Betriebsanomalien, Fehlfunktionen oder andere extreme Betriebsbedingungen treten jedoch in der Regel nur selten auf oder werden im laufenden Betrieb sogar aktiv vermieden, so dass für derartige Betriebsbedingungen in der Regel verhältnismäßig wenige Trainingsdaten zur Verfügung stehen.

Eine bekannte Maßnahme, um das Training auch in spärlich abgedeckten Betriebsbereichen zu verbessern, besteht darin, synthetische Trainingsdaten basierend auf bekannten Klassifikations-Invarianten zu generieren. Ein bekanntes Beispiel hierfür ist die Bilderkennung, bei der die Klassifikation eines abgebildeten Objekts in der Regel unabhängig von einer Bildrotation oder einer Bildspiegelung ist. Eine Menge an verfügbaren Trainingsdaten, sprich Bildern, kann hier auf einfache Weise dadurch vergrößert werden, dass die verfügbaren Bilder mehrfach rotiert und gespiegelt werden und die rotierten und gespiegelten Bilder den Trainingsdaten hinzugefügt werden. Derartige Klassifikation-Invarianten sind jedoch häufig nicht bekannt.

Tatsächlich können synthetische, für das technische System repräsentative Trainingsdaten in vielen Fällen nicht auf einfache Weise aus vorhandenen Trainingsdaten abgeleitet werden. Ein Mangel an Trainingsdaten, insbesondere für selten auftretende Betriebszustände und Betriebsanomalien wirkt sich jedoch oft nachteilig auf einen Trainingserfolg aus.

Es ist Aufgabe der vorliegenden Erfindung, ein Verfahren und ein Assistenzsystem zum Generieren von Trainingsdaten anzugeben, die ein effizienteres Training erlauben.

Gelöst wird diese Aufgabe durch ein computerimplementiertes Verfahren mit den Merkmalen des Patentanspruchs 1, durch ein Assistenzsystem mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zum Generieren von Trainingsdaten zum lernbasierten Konfigurieren eines technischen Systems werden zunächst Sensordaten des technischen Systems oder eines technischen Referenzsystems in Trainingsdatensätzen gespeichert. Das lernbasierte Konfigurieren des technischen Systems kann insbesondere durch Trainieren einer lernbasierten Steuerung des technischen Systems mittels der generierten Trainingsdaten erfolgen. Das technische System kann hierbei insbesondere eine Pumpe, eine Gasturbine, eine Windturbine, eine Produktionsanlage, eine medizinische Diagnoseeinrichtung oder ein Kraftwerk sein. Anhand der gespeicherten Trainingsdatensätze wird ein Datengenerator mittels einer maschinellen Lernroutine darauf trainiert, synthetische Datensätze mit einer zumindest näherungsweise gleichen Werteverteilung wie die gespeicherten Trainingsdatensätze zu generieren. Mittels des trainierten Datengenerators werden dann synthetische Datensätze generiert. Die synthetischen Datensätze und/oder daraus abgeleitete Bewertungsdatensätze werden über eine Ausgabeschnittstelle ausgegeben. Über eine Eingabeschnittstelle wird für einen jeweiligen synthetischen Datensatz eine Plausibilitätsangabe eingelesen und abhängig davon der jeweilige synthetische Datensatz als Trainingsdatensatz gespeichert. Die Plausibilitätsangabe kann dabei insbesondere angeben, ob der jeweilige synthetische Datensatz ein realistisches oder ein unrealistisches Betriebsverhalten des technischen Systems wiedergibt. Weiterhin werden zumindest das Training des Datengenerators sowie die Generierung der synthetischen Datensätze erneut ausgeführt.

Zum Ausführen des erfindungsgemäßen Verfahrens sind ein Assistenzsystem, ein Computerprogrammprodukt sowie ein computerlesbares, insbesondere körperliches Speichermedium vorgesehen.

Das erfindungsgemäße Verfahren, das erfindungsgemäße Assistenzsystem sowie das erfindungsgemäße Computerprogrammprodukt können beispielsweise mittels eines Prozessors, einer anwendungsspezifischen integrierten Schaltung (ASIC), eines digitalen Signalprozessors (DSP) und/oder eines sogenannten "Field Programmable Gate Arrays" (FPGA) ausgeführt bzw. implementiert werden.

Ein Vorteil der Erfindung ist insbesondere darin zu sehen, dass durch die generierten und plausibilisierten Trainingsdatensätze eine Menge von realistischen Trainingsdaten in sonst spärlich abgedeckten Betriebsbereichen des technischen Systems signifikant erhöht werden kann. Insbesondere können auch realistische, für Betriebsanomalien typische Trainingsdaten generiert werden. Mittels dieser Trainingsdaten kann das technische System besonders effizient auf eine Detektion von Betriebsanomalien trainiert werden. Zudem ist die Erfindung mit verhältnismäßig geringem Aufwand in bekannte Klassifikations-Systeme integrierbar.

Vorteilhafte Ausführungsformen und Weiterbildungen der Erfindung sind in den abhängigen Ansprüchen angegeben.

Gemäß einer vorteilhaften Ausführungsform der Erfindung können die synthetischen Datensätze und/oder die Bewertungsdatensätze über die Ausgabeschnittstelle an ein, mehrere oder eine Vielzahl von Benutzerterminals ausgegeben werden. Entsprechend können die Plausibilitätsangaben über die Eingabeschnittstelle von einem, mehreren oder einer Vielzahl von Benutzerterminals eingelesen werden. Die Eingabeschnittstelle und/oder die Ausgabeschnittstelle können auch Teil eines Benutzerterminals sein. Mittels eines Benutzerterminals können die synthetischen Datensätze durch einen Benutzer, vorzugsweise einen Experten für das technische System nach ihrer Plausibilität bewertet werden. Auf diese Weise kann implizites Expertenwissen in Form von Wissen über typische oder atypische Verhaltensweisen des technischen Systems dazu genutzt werden, realistische Trainingsdaten zu generieren. Durch die Verwendung mehrerer oder einer Vielzahl von Benutzerterminals können derartige Bewertungen parallel und damit schneller ausgeführt werden.

Weiterhin können die synthetischen Datensätze und/oder die Bewertungsdatensätze über die Ausgabeschnittstelle zu einer auf eine Ermittlung einer Plausibilitätsangabe trainierten Maschinenlernkomponente übermittelt werden. Entsprechend können von der trainierten Maschinenlernkomponente ermittelte Plausibilitätsangaben über die Eingabeschnittstelle eingelesen werden. Eine solche Maschinenlernkomponente kann anstelle oder zusätzlich zu einem Experten zur Bewertung der synthetischen Trainingsdatensätze eingesetzt werden.

Nach einer weiteren vorteilhaften Ausführungsform der Erfindung können gespeicherte Trainingsdatensätze und/oder daraus abgeleitete Bewertungsdatensätze über die Ausgabeschnittstelle ausgegeben werden. Entsprechend kann über die Eingabeschnittstelle für einen jeweils ausgegebenen Trainingsdatensatz und/oder Bewertungsdatensatz eine Plausibilitätsangabe eingelesen werden. Die Ausgabe gespeicherter Trainingsdatensätze ist insofern vorteilhaft, als ein bewertender Benutzer dann nicht davon ausgehen kann, dass die zu bewertenden Datensätze immer synthetisch sind. Eine solche Annahme könnte die Bewertung unbewusst verzerren.

Weiterhin kann für den jeweils ausgegebenen Trainingsdatensatz und/oder Bewertungsdatensatz geprüft werden, ob die hierzu eingelesene Plausibilitätsangabe mit einer früheren Plausibilitätsangabe übereinstimmt. Abhängig davon kann der jeweilige Trainingsdatensatz, insbesondere bei Nichtübereinstimmung gelöscht werden.

Nach einer weiteren vorteilhaften Ausführungsform der Erfindung kann der Datengenerator ein sogenanntes generatives Maschinenlernmodell implementieren, das anhand der gespeicherten Trainingsdatensätze trainiert wird, und mittels dessen die synthetischen Datensätze generiert werden. Derartige generative Maschinenlernmodelle können mit bekannten Lernverfahren darauf trainiert werden, Daten mit einer zumindest näherungsweise gleichen Werteverteilung wie die verwendeten Trainingsdaten zu generieren. So kann beispielsweise unter der Annahme einer statistischen Gaußverteilung ein generatives Maschinenlernmodell auf einfache Weise darauf trainiert werden, Daten zu generieren, die hinsichtlich Mittelwert und Varianz zumindest näherungsweise den Trainingsdaten gleichen. Zur Modellierung komplexerer statistischer, kausaler oder a-priori unbekannter Zusammenhänge ist eine Vielzahl von generativen Maschinenlernmodelle spezifisch verfügbar.

Insbesondere kann das generative Maschinenlernmodell durch einen Autoencoder, generative gegnerische Netze, ein Gauß-Prozess-Modell, ein probabilistisches Maschinenlernmodell, ein bayessches Netz und/oder ein Hidden-Markov-Modell implementiert werden.

Nach einer vorteilhaften Weiterbildung der Erfindung kann über die Eingabeschnittstelle für einen jeweiligen synthetischen Datensatz eine Klassifizierungsangabe eingelesen werden. Die die Klassifizierungsangabe kann dem jeweiligen synthetischen Datensatz zugeordnet gespeichert werden. Auf diese Weise können die ausgegebenen Trainingsdatensätze parallel zu ihrer Plausibilitätsbewertung vorgegebenen Klassen, z.B. vorgegebenen Betriebszuständen des technischen Systems zugeordnet werden.

Weiterhin können bei der Ableitung der Bewertungsdatensätze statistische Muster, Korrelationen, Zeitreihen, Frequenzen und/oder vorgegebene Parameter der synthetischen Datensätze spezifisch extrahiert und/oder aufbereitet werden. Darüber hinaus können die synthetischen Datensätze in eine bildliche Darstellung umgesetzt werden. Vorzugsweise können die synthetischen Datensätze an einem Benutzerterminal durch Graphen von Zeitreihen, Diagramme, Heatmaps, Spektraldarstellungen oder andere zur schnellen Erfassung und Bewertung durch den Benutzer geeignete Darstellungen visualisiert werden.

Ein Ausführungsbeispiel der Erfindung wird nachfolgend anhand der Zeichnung näher erläutert. Dabei zeigen jeweils in schematischer Darstellung
- Figur 1: eine Ölförderpumpe mit einer lernbasierten Steuerung,
- Figur 2: die Steuerung der Ölförderpumpe in einer Trainingsphase und
- Figur 3: ein erfindungsgemäßes Assistenzsystem zum Generieren von Trainingsdaten für die Steuerung.

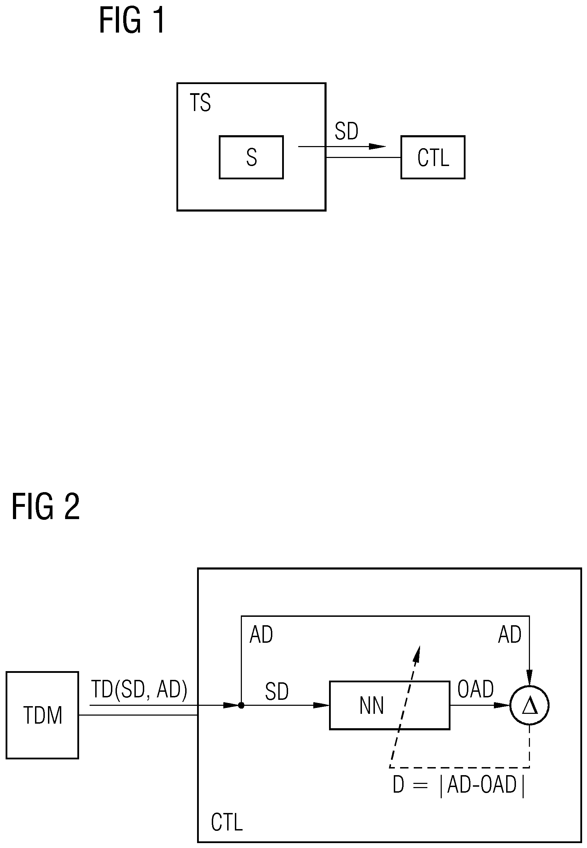

Figur 1 veranschaulicht in schematischer Darstellung beispielhaft eine Ölförderpumpe als technisches System TS. Die Ölförderpumpe TS wird elektrisch betrieben, ist tauchfähig und wird zur Ölförderung im Bohrloch versenkt (downhole). Alternativ oder zusätzlich kann als technisches System TS beispielsweise auch eine Gasturbine, eine Windturbine, eine Produktionsanlage, eine medizinische Diagnoseeinrichtung, ein Kraftwert oder ein Roboter vorgesehen sein.

Die Ölförderpumpe TS ist mit einer erfindungsgemäßen, lernbasierten Steuerung CTL gekoppelt. Letztere kann als Teil des technischen Systems TS aufgefasst oder implementiert werden oder ganz oder teilweise extern zum technischen System TS, z.B. in einer Cloud implementiert sein. Die Steuerung CTL dient zum Steuern des technischen Systems TS.

Unter einem Steuern des technischen Systems TS sei hierbei auch eine Regelung des technischen Systems TS sowie eine Ausgabe und Verwendung von steuerungsrelevanten, d.h. zum Steuern des technischen Systems TS beitragenden Daten und Steuersignalen verstanden. Derartige steuerungsrelevante Daten können insbesondere Überwachungsdaten, Prognosedaten und/oder Klassifikationsdaten umfassen, die insbesondere zum Erkennen von Betriebsanomalien, zur Fehlererkennung, zur Identifizierung von Fehlerursachen, zur Betriebsoptimierung, zur Überwachung oder Wartung des technischen Systems TS und/oder zur Verschleiß- oder Beschädigungserkennung verwendet werden können.

Die Ölförderpumpe TS verfügt weiterhin über mit der Steuerung CTL gekoppelte Sensoren S, die im laufenden Betrieb fortlaufend einen oder mehrere Betriebsparameter der Ölförderpumpe TS messen und als Sensordaten SD zur Steuerung CTL übermitteln. Neben den Sensordaten SD können durch die Steuerung CTL noch weitere Betriebsparameter aus anderen Datenquellen des technischen Systems TS oder aus externen Datenquellen erfasst werden.

Als Betriebsparameter sind hier und im Folgenden insbesondere physikalische, regelungstechnische, wirkungstechnische und/oder bauartbedingte Betriebsgrößen, Eigenschaften, Leistungsdaten, Wirkungsdaten, Ertragsdaten, Bedarfsdaten, Zustandsdaten, Systemdaten, Vorgabewerte, Steuerdaten, Sensordaten, Messwerte, Umgebungsdaten, Überwachungsdaten, Prognosedaten, Analysedaten und/oder andere im Betrieb des technischen Systems TS anfallende und/oder einen Betriebszustand oder eine Steueraktion des technischen Systems TS beschreibende Daten zu verstehen. Dies können z.B. Sensordaten über Motorströme oder Förderleistung der Ölförderpumpe TS oder Sensordaten über Temperatur, Druck oder Vibrationen an unterschiedlichen Positionen der Ölförderpumpe TS sein.

Die Steuerung CTL steuert das technische System TS abhängig von den Sensordaten SD in optimierter Weise. Insbesondere detektiert die Steuerung CTL anhand der fortlaufend empfangenen Sensordaten SD Betriebsanomalien, Beschädigungen, Fehlfunktion und/oder Fehlerursachen des technischen Systems TS, hier der Ölförderpumpe im laufenden Betrieb. Abhängig von dieser Detektion können durch das technische System TS oder dessen Steuerung CTL frühzeitig geeignete anomaliespezifische Maßnahmen eingeleitet werden und/oder das technische System TS in einer für die detektierte Betriebsanomalie optimierten Weise gesteuert werden.

Zu den vorstehenden Zwecken wurde die Steuerung CTL vorab durch ein Verfahren des maschinellen Lernens darauf trainiert, anhand von klassifizierten Sensordaten Betriebsanomalien, Beschädigungen, Fehlfunktionen und/oder Fehlerursachen des technischen Systems TS zu detektieren und/oder zu identifizieren.

Dieses vorab durchzuführende Training der Steuerung CTL wird durch Figur 2 veranschaulicht, in der die Steuerung CTL in einer Trainingsphase schematisch dargestellt ist.

Zum Ausführen des Trainings und zum Steuern des technischen Systems TS verfügt die Steuerung CTL über einen oder mehrere Prozessoren und über daran gekoppelte Speicher.

Die Steuerung CTL ist zum Zweck des Trainings an einen Trainingsdatenspeicher TDM, vorzugsweise eine Datenbank gekoppelt. Im Trainingsdatenspeicher TDM ist eine große Menge von klassifizierten Trainingsdatensätzen TD gespeichert. Die gespeicherten Trainingsdatensätze TD umfassen sowohl vom technischen System TS oder einem technischen Referenzsystem gewonnene, reale Trainingsdatensätze als auch mittels eines erfindungsgemäßen Assistenzsystems generierte, synthetische Trainingsdatensätze. Ein jeweiliger Trainingsdatensatz TD enthält dabei einen jeweiligen realen oder synthetischen Sensordatensatz SD sowie eine diesem Sensordatensatz SD zugeordnete Angabe AD über eine Betriebsanomalie. Eine solche Angabe AD kann beispielsweise ein Vorliegen, einen Typ, eine Ursache und/oder eine Fehlerhaftigkeit der jeweiligen Betriebsanomalie oder ein hierdurch bedingtes Folgeverhalten des technischen Systems TS spezifizieren und/oder quantifizieren. Ein jeweiliger Trainingsdatensatz TD bzw. ein jeweiliger Sensordatensatz SD wird durch die jeweils zugeordnete Angabe AD klassifiziert.

In der dargestellten Trainingsphase wird durch die Steuerung CTL eine große Menge von Trainingsdatensätzen TD(SD,AD), die jeweils einen Sensordatensatz SD und eine zugeordneten Angabe AD über eine Betriebsanomalie umfassen, aus dem Trainingsdatenspeicher TDM eingelesen.

Die Steuerung CTL verfügt im vorliegenden Ausführungsbeispiel über ein künstliches neuronales Netz NN als trainierbares Lernmodul. Alternativ oder zusätzlich kann das Lernmodul ein rekurrentes neuronales Netz, ein faltendes neuronales Netz, ein mehrlagiges Perzeptron, ein bayessches neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfassen.

Die Sensordatensätze SD der eingelesenen Trainingsdatensätze TD(SD,AD) werden dem neuronalen Netz NN als Eingabedaten zugeführt. Das neuronale Netz NN ist datengetrieben trainierbar und weist eine Trainingsstruktur aus, die sich während eines Trainings ausbildet.

Unter einem Training sei allgemein eine Optimierung einer Abbildung von Eingabedaten eines parametrisierten Systemmodells, z.B. hier eines neuronalen Netzes, auf dessen Ausgabedaten verstanden. Diese Abbildung wird nach vorgegebenen, gelernten oder zu lernenden Kriterien während einer Trainingsphase optimiert. Als Kriterien können z.B. bei Klassifikationsmodellen ein Klassifikationsfehler oder bei Steuermodellen ein Erfolg einer Steueraktion, der z.B. einen Ertrag, Ressourcenbedarf, Schadstoffausstoß und/oder Verschleiß eines technischen Systems betreffen kann, herangezogen werden. Eine Trainingsstruktur kann z.B. eine Vernetzungsstruktur von Neuronen eines neuronalen Netzes und/oder Gewichte von Verbindungen zwischen den Neuronen umfassen, die durch das Training so ausgebildet oder optimiert werden, dass die Kriterien möglichst gut erfüllt werden.

Im vorliegenden Ausführungsbeispiel wird das neuronale Netz NN darauf trainiert, anhand eines jeweiligen Sensordatensatzes SD die jeweils zugeordnete Angabe AD möglichst gut zu reproduzieren. Zu diesem Zweck wird ein durch das neuronale Netz NN aus einem jeweiligen Sensordatensatz SD abgeleiteter Ausgabedatensatz OAD mit der mit diesem Sensordatensatz SD zugeordneten Angabe AD verglichen. Im Rahmen des Vergleichs wird eine Abweichung D zwischen dem jeweils abgeleiteten Ausgabedatensatz OAD und der jeweiligen Angabe AD ermittelt. Die Abweichung D repräsentiert hierbei einen Klassifikationsfehler des neuronalen Netzes NN. Die Abweichung D wird - wie in Figur 2 durch einen strichlierten Pfeil angedeutet - zum neuronalen Netz NN zurückgeführt, das darauf trainiert wird, die Abweichung D zu minimieren, d.h. die Angaben AD möglichst genau zu reproduzieren.

Zum Training des neuronalen Netzes NN kann eine Vielzahl von Standard-Trainingsverfahren für neuronale Netze, insbesondere Verfahren des überwachten Lernens eingesetzt werden. Die zu minimierende Abweichung D kann dabei durch eine geeignete Kostenfunktion repräsentiert werden. Zur Minimierung der Abweichung D kann insbesondere eine Gradientenabstiegsmethode verwendet werden.

Indem das neuronale Netz NN trainiert wird, wird die Steuerung CTL und damit technische System TS konfiguriert. Mittels des trainierten neuronalen Netzes NN können dann anhand von im laufenden Betrieb erfassten, nicht klassifizierten Sensordaten häufig zutreffende Angaben über Betriebsanomalien ermittelt werden und so insbesondere Betriebsanomalien, Beschädigungen, Fehlfunktionen und/oder Fehlerursachen des technischen Systems detektiert werden. Abhängig davon kann die Steuerung CTL das technische System TS, hier die Ölförderpumpe, wie im Zusammenhang mit Figur 1 beschrieben, steuern.

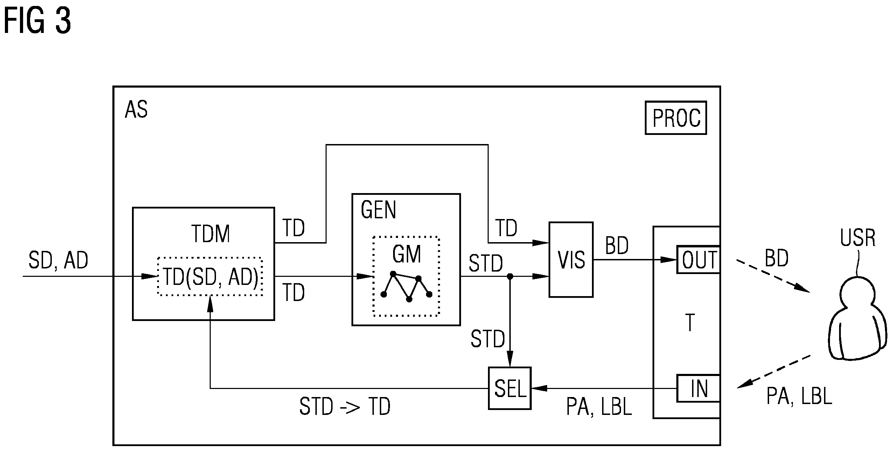

Figur 3 zeigt ein erfindungsgemäßes Assistenzsystem AS zum Generieren von Trainingsdaten für die Steuerung CTL in schematischer Darstellung. Das Assistenzsystem AS verfügt über einen oder mehreren Prozessoren PROC zum Ausführen von Verfahrensschritten des Assistenzsystems AS sowie über einen oder mehrere Speicher zum Speichern von zu verarbeitenden Daten.

Das erfindungsgemäße, auf dem Assistenzsystems AS ablaufende Verfahren oder Teile davon können insbesondere als Service in einer Cloud oder auf einer anderen Daten- oder Serviceplattform ausgeführt werden.

Das Assistenzsystem AS weist einen Trainingsdatenspeicher TDM, vorzugsweise eine Datenbank zum Speichern von Trainingsdaten auf. Alternativ oder zusätzlich kann der Trainingsdatenspeicher TDM ganz oder teilweise extern zum Assistenzsystem AS, insbesondere in einer Cloud implementiert sein.

Zum initialen Befüllen des Trainingsdatenspeichers TDM werden reale, vorab klassifizierte Sensordatensätze SD des technischen Systems TS, hier der Ölförderpumpe, oder eines zum technischen System TS ähnlichen Referenzsystems eingelesen. Ein derartiges Referenzsystem kann insbesondere ein baugleiches technisches System oder ein ähnliches Modell mit einem zum technischen System TS möglichst ähnlichen Betriebsverhalten sein. Klassifiziert bedeutet in diesem Fall, dass den Sensordatensätzen SD jeweils eine Angabe AD über eine Betriebsanomalie des technischen Systems TS zugeordnet ist. Wie oben bereits beschrieben kann die Angabe AD z.B. ein Vorliegen, einen Typ und/oder eine Ursache einer Betriebsanomalie sowie einen hierdurch bewirkten Fehler oder ein Folgeverhalten des technischen Systems TS spezifizieren oder quantifizieren. Die Zuordnung der Angaben AD zu den Sensordatensätzen SD kann z.B. anhand von historischen Daten über tatsächlich aufgetretene Betriebsanomalien oder von Experten durch Bewertung der Sensordatensätze SD vorgenommen werden.

Der jeweilige klassifizierte Sensordatensatz SD wird mit der jeweils zugeordneten Angabe AD als klassifizierter Trainingsdatensatz TD(SD,AD) im Trainingsdatenspeicher TDM gespeichert. Die Sensordatensätze SD können insbesondere Zeitreihen eines Öldrucks oder einer Öltemperatur an verschiedenen Stellen der Ölförderpumpe TS und/oder einen Verlauf von Temperaturen verschiedener Komponenten des technischen Systems TS oder des Referenzsystems betreffen. Darüber hinaus können die Sensordatensätze SD einen Verlauf eines Motorstroms, einen Verlauf einer Förderleistung oder andere physikalische Messwerte oder Betriebsdaten des technischen Systems TS oder des Referenzsystems umfassen.

Das Assistenzsystem AS verfügt weiterhin über einen mit dem Trainingsdatenspeicher TDM gekoppelten Datengenerator GEN. Der Datengenerator GEN implementiert ein generatives Maschinenlernmodell GM. Das generative Maschinenlernmodell GM wird durch eine datengetriebene maschinelle Lernroutine anhand der im Trainingsdatenspeicher TDM gespeicherten Trainingsdatensätze TD darauf trainiert, eine Werteverteilung der Trainingsdatensätze TD zu modellieren und damit synthetische Datensätze mit einer zumindest näherungsweise gleichen Werteverteilung wie die gespeicherten Trainingsdatensätze TD zu generieren. Das generative Maschinenlernmodell GM lernt dabei gewissermaßen Verteilungscharakteristika der zugeführten Trainingsdatensätze TD zu reproduzieren.

Die Werteverteilung kann insbesondere eine statistische Werteverteilung sein und beispielsweise Mittelwerte, Verteilungsbreiten, Varianzen, Standardabweichungen und/oder statistische Korrelationen in einer, mehreren oder vielen Parameterdimensionen der Trainingsdatensätze TD betreffen. Derartige Werteverteilungen von Daten können z.B. durch bayessche neuronale Netze, Autoencoder, generative gegnerische Netze, Gauß-Prozess-Modelle, probabilistische Maschinenlernmodelle und/oder Hidden-Markov-Modelle effizient modelliert werden, um damit synthetische Daten mit entsprechender Werteverteilung zu generieren. Zum Training derartiger generativer Maschinenlernmodelle sowie zur darauf basierenden Generierung synthetischer Datensätze steht eine Vielzahl von Standardverfahren des maschinellen Lernens zur Verfügung.

Nach erfolgtem Training des generativen Maschinenlernmodells GM werden durch den trainierten Datengenerator GEN synthetische Datensätze STD mit näherungsweise gleicher Werteverteilung wie die gespeicherten Trainingsdatensätze TD generiert. Die Generierung der synthetischen Datensätze STD kann hierbei insbesondere durch einen Zufallsgenerator des Datengenerators GEN stimuliert oder induziert werden. Die generierten synthetischen Datensätze STD werden vom Datengenerator GEN zu einem Visualisierungsmodul VIS übermittelt. Zusätzlich werden auch im Trainingsdatenspeicher TDM gespeicherte Trainingsdatensätze TD zum Visualisierungsmodul VIS übermittelt.

Das Visualisierungsmodul VIS ist an den Trainingsdatenspeicher TDM und den Datengenerator GEN gekoppelt. Durch das Visualisierungsmodul VIS werden die übermittelten gespeicherten und synthetischen Trainingsdatensätze TD und STD in Bewertungsdatensätze BD umgesetzt, insbesondere in Bilddaten oder Videodaten zur Visualisierung der gespeicherten und synthetischen Trainingsdatensätze TD und STD. Die Bewertungsdatensätze BD können z.B. Graphen von Zeitreihen, Diagramme, Heatmaps oder andere zur schnellen Bewertung durch einen Benutzer geeignete Abbildungen umfassen oder darstellen. Bei der Umsetzung können insbesondere statistische Muster, Korrelationen, Frequenzen und/oder vorgegebene Parameter der gespeicherten und synthetischen Datensätze TD und STD spezifisch extrahiert und in die Bewertungsdatensätze BD eingefügt werden. Zur Datenreduktion können hierbei weniger bewertungsrelevante Daten verworfen werden.

Das Assistenzsystem AS verfügt im vorliegenden Ausführungsbeispiel weiterhin über ein eigenes Benutzerterminal T. Das Benutzerterminal T weist eine Ausgabeschnittstelle OUT, z.B. einen Bildschirm, sowie eine Eingabeschnittstelle IN, z.B. eine Tastatur, eine Maus oder einen berührungsempfindlichen Bildschirm auf.

Die Ausgabeschnittstelle OUT ist an das Visualisierungsmodul VIS gekoppelt und dient zur Ausgabe, insbesondere Visualisierung eines jeweiligen Bewertungsdatensatzes BD. Der jeweilige Bewertungsdatensatz BD wird vom Visualisierungsmodul VIS über die Ausgabeschnittstelle OUT an einen Benutzer USR, vorzugsweise einen Experten für das technische System TS zur Bewertung des jeweils zugrundeliegenden gespeicherten bzw. synthetischen Trainingsdatensatzes TD bzw. STD ausgegeben. Der Benutzer USR bewertet einen jeweils visualisierten Trainingsdatensatz TD bzw. STD danach, ob er realistisch oder unrealistisch für das technische System TS ist. Entsprechend seiner Bewertung gibt der Benutzer USR für den jeweiligen Trainingsdatensatz TD bzw. STD eine Plausibilitätsangabe PA über die Eingabeschnittstelle IN ein. Die eingegebene Plausibilitätsangabe PA wird dem jeweils visualisierten Trainingsdatensatz TD bzw. STD zugeordnet. Realistisch erscheinenden Trainingsdatensätzen kann auf diese Weise eine Plausibilitätsangabe wie z.B. "echt" oder "realistisch" und unrealistisch erscheinenden Trainingsdatensätzen kann eine Plausibilitätsangabe wie z.B. "künstlich", "Artefakt" oder "atypisch" zugeordnet werden.

Vorzugsweise kann durch den Benutzer USR für einen jeweils visualisierten Trainingsdatensatz TD bzw. STD zusätzlich eine Klassifizierungsangabe LBL über die Eingabeschnittstelle IN eingegeben werden. Die Klassifizierungsangabe LBL wird dem jeweils bewerteten Trainingsdatensatz TD bzw. STD zugeordnet und vorzugsweise zu diesem hinzugefügt. Auf diese Weise kann neben der Plausibilitätsbewertung auch noch eine Klassifizierung der Trainingsdatensätze nach vorgegebenen Klassen oder anderen Kriterien vorgenommen werden. Das erfindungsgemäße Verfahren lässt sich somit mit verhältnismäßig geringem Aufwand in bekannte Klassifikationssysteme integrieren und parallel zur Klassifikation nutzen.

Die Aufnahme bereits gespeicherter Trainingsdatensätze TD in den Bewertungsprozess durch den Benutzer USR ist insofern vorteilhaft, als der Benutzer USR bei der Bewertung dann nicht davon ausgehen kann, dass die zu bewertenden Trainingsdatensätze immer synthetisch sind. Eine solche Annahme des bewertenden Benutzers USR könnte seine Bewertung unbewusst verzerren. Darüber hinaus kann bei einem bereits früher bewerteten Trainingsdatensatz TD geprüft werden, ob die aktuell eingelesene Plausibilitätsangabe PA mit einer früheren Plausibilitätsangabe übereinstimmt und so eine Zuverlässigkeit der Bewertung abgeschätzt werden.

Alternativ oder zusätzlich zu einem internen Benutzerterminal T können auch ein, mehrere oder eine Vielzahl von externen Terminals (nicht dargestellt) vorgesehen sein, die an eine Ausgabeschnittstelle und Eingabeschnittstelle des Assistenzsystems AS gekoppelt sind. Dies erlaubt es, die Plausibilitätsbewertung und gegebenenfalls die Klassifikation von einer Vielzahl von Benutzern parallel einzuholen. Dabei können insbesondere bekannte Verfahren des sogenannten Crowdsourcing und der sogenannten Gamification verwendet werden.

Gemäß einer vorteilhaften Weiterbildung der Erfindung kann das Assistenzsystem AS über die Eingabeschnittstelle IN und die Ausgabeschnittstelle OUT an eine trainierte Maschinenlernkomponente (nicht dargestellt) gekoppelt sein, die auf eine Ermittlung einer Plausibilitätsangabe anhand von in dieser Hinsicht klassifizierten Trainingsdaten trainiert wurde. Wenn das generative Maschinenlernmodell GM mittels generativer gegnerischer Netze implementiert ist, kann vorzugsweise ein gegnerisches Netz als Maschinenlernkomponente verwendet werden. Die trainierte Maschinenlernkomponente kann gegebenenfalls einen oder mehrere Benutzer USR ersetzen oder ergänzen. Die Trainingsdatensätze TD und STD und/oder die Bewertungsdatensätze BD können dann über die Ausgabeschnittstelle OUT zur trainierten Maschinenlernkomponente übermittelt werden und von dieser als realistisch oder unrealistisch klassifiziert werden. Eine entsprechende, von der trainierten Maschinenlernkomponente ermittelte Plausibilitätsangabe PA kann sodann über die Eingabeschnittstelle IN eingelesen werden.

Die für einen jeweiligen Trainingsdatensatz TD bzw. STD über die Eingabeschnittstelle IN eingelesene, vom Benutzer USR, von einem externen Terminal und/oder von einer trainierten Maschinenlernkomponente stammende Plausibilitätsangabe PA sowie die Klassifizierungsangabe LBL werden zu einem Selektionsmodul SEL des Assistenzsystems AS übermittelt. Das Selektionsmodul SEL ist an die Eingabeschnittstelle IN, an den Datengenerator GEN und an den Trainingsdatenspeicher TDM gekoppelt.

Das Selektionsmodul SEL empfängt die synthetischen Trainingsdatensätze STD vom Datengenerator GEN und ordnet einem jeweiligen synthetischen Trainingsdatensatz STD die für diesen eingegebene Plausibilitätsangabe PA zu. Weiterhin selektiert das Selektionsmodul SEL anhand der Plausibilitätsangabe PA diejenigen synthetischen Trainingsdatensätze STD, die als realistisch bewertet wurden und speichert diese als neue Trainingsdatensätze TD im Trainingsdatenspeicher TDM ab. Die gemäß der Plausibilitätsangabe PA als unrealistisch bewerteten synthetischen Trainingsdatensätze STD werden dagegen nicht im Trainingsdatenspeicher TDM abgespeichert, sondern verworfen. Falls ein gespeicherter und früher als realistisch bewerteter Trainingsdatensatz als unrealistisch bewertet wird, kann dieser Trainingsdatensatz im Trainingsdatenspeicher TDM gelöscht werden oder z.B. als unsicher markiert werden.

Durch die Rückführung der als realistisch bewerteten synthetischen Trainingsdatensätze STD sammeln sich im Trainingsdatenspeicher TDM zunehmend realistische und damit für ein effizientes Training verwendbare Trainingsdaten an.

Im nächsten Schritt wird das generative Maschinenlernmodell GM anhand der inzwischen erweiterten Menge der im Trainingsdatenspeicher TDM gespeicherten Trainingsdatensätze TD erneut trainiert. Das generative Maschinenlernmodell GM wird dabei - analog zum oben beschriebenen Training - darauf trainiert, neue synthetische Datensätze mit einer zumindest näherungsweise gleichen Werteverteilung wie die erweiterte Menge an gespeicherten Trainingsdatensätzen TD zu generieren. Durch den erneut trainierten Trainingsdatengenerator GEN werden dann wiederum neue synthetische Trainingsdatensätze STD generiert, die wie oben beschrieben visualisiert, bewertet und selektiert werden. Die als realistisch bewerteten neuen synthetischen Trainingsdatensätze STD werden entsprechend wieder im Trainingsdatenspeicher TDM als neue Trainingsdatensätze TD abgespeichert.

Die vorstehenden Verfahrensschritte des Trainings, der Generierung von neuen synthetischen Datensätzen und deren Visualisierung, Bewertung und ggf. Speicherung im Trainingsdatenspeicher TDM können mehrfach iteriert werden. Zum Steuern der Iteration kann das Assistenzsystem AS ein Iterationsmodul aufweisen, das die Iteration ausführt und bei Vorliegen eines vorgegebenen Ablaufkriteriums beendet. Als Ablaufkriterium kann insbesondere eine Anzahl der Iterationen, eine Menge der Trainingsdatensätze TD im Trainingsdatenspeicher TDM, eine Abdeckung von Betriebsanomalien oder anderen Betriebssituationen durch die Trainingsdaten, eine Trainingsdauer und/oder eine Qualität der Trainingsdaten herangezogen werden.

Durch die Plausibilitätsabfrage beim Benutzer USR und dem davon abhängigen Abspeichern und Anreichern realistischer synthetischer Trainingsdatensätze STD wird gewissermaßen ein Feedbackkanal oder eine Feedbackschleife für Expertenwissen zum Trainingsdatenspeicher TDM realisiert. Auch die vergebenen Klassifizierungsangaben LBL können in die Feedbackschleife eingespeist werden, um durch erneute Bewertung bestätigt, verifiziert oder als unsicher erkannt zu werden. Auf die vorstehende Weise kann die verfügbare Menge von Trainingsdaten signifikant erhöht werden, die insbesondere auch für Betriebsanomalien repräsentativ sind.

Die im Trainingsdatenspeicher TDM gespeicherten, durch das erfindungsgemäße Assistenzsystem AS stark vermehrten Trainingsdatensätze TD können ausgegeben und/oder dazu verwendet werden, die Steuerung CTL oder das technische System TS, wie im Zusammenhang mit Figur 2 beschrieben, zu trainieren bzw. zu konfigurieren.

Durch das erfindungsgemäße Zusammenwirken eines generativen Maschinenlernmodells zum Generieren synthetischer Trainingsdaten und deren Benutzerbewertung in einer Feedbackschleife, kann implizit das Expertenwissen in Form von Wissen über typische oder atypische Verhaltensweisen des technischen Systems dazu genutzt werden, neue realistische Trainingsdaten zu generieren. Auf diese Weise kann insbesondere das Training einer lernbasierten Steuerung zur Anomaliedetektion wesentlich verbessert werden.

## Patentansprüche

1. Computerimplementiertes Verfahren zum Generieren von Trainingsdaten zum lernbasierten Konfigurieren eines technischen Systems (TS), wobei
a) Sensordaten (SD) des technischen Systems (TS) oder eines technischen Referenzsystems in Trainingsdatensätzen (TD) gespeichert werden,
b) anhand der gespeicherten Trainingsdatensätze (TD) ein Datengenerator (GEN) mittels einer maschinellen Lernroutine darauf trainiert wird, synthetische Datensätze (STD) mit einer zumindest näherungsweise gleichen Werteverteilung wie die gespeicherten Trainingsdatensätze (TD) zu generieren,
c) mittels des trainierten Datengenerators (GEN) synthetische Datensätze (STD) generiert werden,
d) die synthetischen Datensätze (STD) und/oder daraus abgeleitete Bewertungsdatensätze (BD) über eine Ausgabeschnittstelle (OUT) ausgegeben werden,
e) über eine Eingabeschnittstelle (IN) für einen jeweiligen synthetischen Datensatz (STD) eine Plausibilitätsangabe (PA) eingelesen wird und abhängig davon der jeweilige synthetische Datensatz (STD) als Trainingsdatensatz (TD) gespeichert wird, und
f) die Verfahrensschritte b) und c) erneut ausgeführt werden.

2. Verfahren nach Anspruch 1, **dadurch gekennzeichnet,**
**dass** die synthetischen Datensätze (STD) und/oder die Bewertungsdatensätze (BD) über die Ausgabeschnittstelle (OUT) an ein, mehrere oder eine Vielzahl von Benutzerterminals (T) ausgegeben werden, und/oder
**dass** die Plausibilitätsangaben (PA) über die Eingabeschnittstelle (IN) von einem, mehreren oder einer Vielzahl von Benutzerterminals (T) eingelesen werden.

3. Verfahren nach einem der vorhergehenden Ansprüche, **dadurch gekennzeichnet,**
**dass** die synthetischen Datensätze (STD) und/oder die Bewertungsdatensätze (BD) über die Ausgabeschnittstelle (OUT) zu einer auf eine Ermittlung einer Plausibilitätsangabe (PA) trainierten Maschinenlernkomponente übermittelt werden, und dass von der trainierten Maschinenlernkomponente ermittelte Plausibilitätsangaben (PA) über die Eingabeschnittstelle (IN) eingelesen werden.

4. Verfahren nach einem der vorhergehenden Ansprüche, **dadurch gekennzeichnet,**
**dass** gespeicherte Trainingsdatensätze (TD) und/oder daraus abgeleitete Bewertungsdatensätze (BD) über die Ausgabeschnittstelle (OUT) ausgegeben werden, und
**dass** über die Eingabeschnittstelle (IN) für einen jeweils ausgegebenen Trainingsdatensatz (TD) und/oder Bewertungsdatensatz (BD) eine Plausibilitätsangabe (PA) eingelesen wird.

5. Verfahren nach Anspruch 4, **dadurch gekennzeichnet, dass** für den jeweils ausgegebenen Trainingsdatensatz (TD) und/oder Bewertungsdatensatz (BD) geprüft wird, ob die hierzu eingelesene Plausibilitätsangabe (PA) mit einer früheren Plausibilitätsangabe übereinstimmt und abhängig davon der jeweilige Trainingsdatensatz (TD) gelöscht wird.

6. Verfahren nach einem der vorhergehenden Ansprüche, **dadurch gekennzeichnet,**
**dass** der Datengenerator (GEN) ein generatives Maschinenlernmodell (GM) implementiert, das anhand der gespeicherten Trainingsdatensätze (TD) trainiert wird, und mittels dessen die synthetischen Datensätze (STD) generiert werden.

7. Verfahren nach Anspruch 6, **dadurch gekennzeichnet, dass** das generative Maschinenlernmodell (GM) durch einen Autoencoder, generative gegnerische Netze, ein Gauß-Prozess-Modell, ein probabilistisches Maschinenlernmodell, ein bayessches Netz und/oder ein Hidden-Markov-Modell implementiert wird.

8. Verfahren nach einem der vorhergehenden Ansprüche, **dadurch gekennzeichnet,**
**dass** über die Eingabeschnittstelle (IN) für einen jeweiligen synthetischen Datensatz (STD) eine Klassifizierungsangabe (LBL) eingelesen wird, und
**dass** die Klassifizierungsangabe (LBL) dem jeweiligen synthetischen Datensatz (STD) zugeordnet gespeichert wird.

9. Verfahren nach einem der vorhergehenden Ansprüche, **dadurch gekennzeichnet, dass**
bei der Ableitung der Bewertungsdatensätze (BD)
- statistische Muster, Korrelationen, Zeitreihen, Frequenzen und/oder vorgegebene Parameter der synthetischen Datensätze (STD) spezifisch extrahiert werden und/oder
- die synthetischen Datensätze (STD) in eine bildliche Darstellung umgesetzt werden.

10. Verfahren nach einem der vorhergehenden Ansprüche, **dadurch gekennzeichnet, dass**
das technische System (TS) eine Pumpe, eine Gasturbine, eine Windturbine, eine Produktionsanlage, eine medizinische Diagnoseeinrichtung oder ein Kraftwerk umfasst.

11. Verfahren nach einem der vorhergehenden Ansprüche, **dadurch gekennzeichnet,**
**dass** das Verfahren als Service in einer Cloud ausgeführt wird.

12. Assistenzsystem (AS) zum Generieren von Trainingsdaten (TD) zum lernbasierten Konfigurieren eines technischen Systems (TS), eingerichtet zum Ausführen eines Verfahrens nach einem der vorhergehenden Ansprüche.

13. Computerprogrammprodukt eingerichtet zum Ausführen eines Verfahrens nach einem der Ansprüche 1 bis 11.

14. Computerlesbares Speichermedium mit einem Computerprogrammprodukt nach Anspruch 13.
